# EUROPEAN PATENT SPECIFICATION

(11) **EP 3 178 697 B1**
(45) Date of publication and mention of the grant of the patent: **07.10.2020**
(21) Application number: 15829815.8
(22) Date of filing: 06.08.2015
(51) Int. Cl.: B60Q 1/20, B60R 19/50, F21S 41/29, B60Q 1/04

(54) **FOG LAMP MOUNTING STRUCTURE**
MONTAGESTRUKTUR FÜR NEBELLAMPE
STRUCTURE DE MONTAGE DE PHARE ANTIBROUILLARD

(30) Priority: 06.08.2014 CN 201420439168 U
(43) Date of publication of application: 14.06.2017
(73) Proprietor: Compagnie Plastic Omnium, 69007 Lyon (FR); Yanfeng Plastic Omnium Automotive Exterior Systems Co., Ltd., Shanghai 201805 (CN)
(72) Inventor: TANG, Lingjun, Shanghai 201805 (CN); MA, Zhongyu, Shanghai 201805 (CN)
(74) Representative: Vallée-Thiollier, Clémence-Olivia Laure Marie
(86) International application number: PCT/CN2015/086286
(87) International publication number: WO 2016/019892

(56) References cited:
- WO-A1-2009/123942
- CN-A- 103 832 324
- CN-U- 202 728 069
- CN-U- 202 966 097
- CN-U- 203 032 529
- CN-U- 203 032 529
- CN-U- 203 974 666
- DE-A1-102007 047 270
- JP-A- 2004 314 873
- JP-A- 2008 247 363
- JP-A- 2011 084 169
- JP-A- 2014 028 554
- US-A1- 2012 113 669

## Description

### Field of Invention

The present invention relates to the field of assembling vehicle parts, and more particularly to a fog lamp mounting structure.

### Background

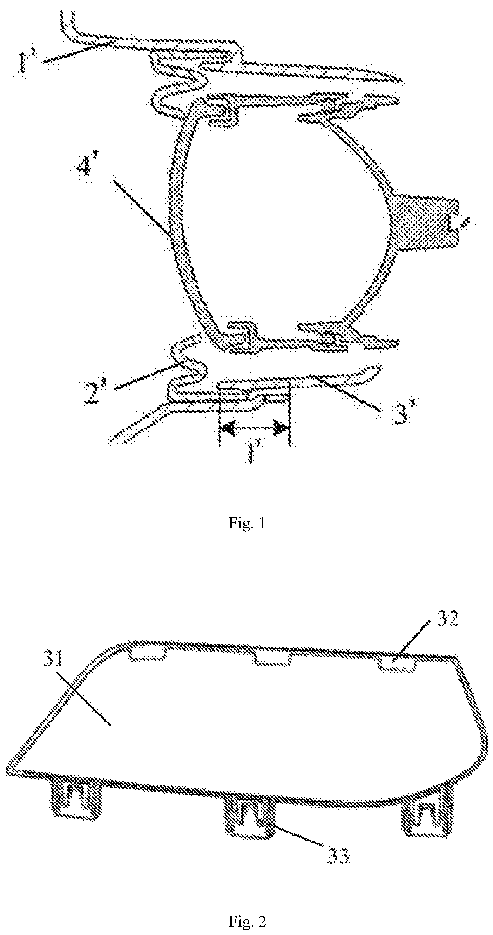

When mounting a fog lamp in the prior art, as illustrated in Fig. 1, a fog lamp 4' is first mounted inside fog lamp mounting holes, symmetrically arranged at both ends of a vehicle front bumper skin 1', through a fog lamp bracket 2'; and then a fog lamp cover plate 3' is mounted such that the fog lamp cover plate 3' matches peripherally or locally with the front bumper skin 1'. The fog lamp cover plate 3' not only facilitates removal and adjustment of the fog lamp, but also has an aesthetic effect. However, it shall be understood that when installed, the fog lamp cover plate 3' needs to be fixedly connected with the fog lamp bracket 2' through a corresponding connecting structure, and that a conventional connecting structure occupies a certain space in the X direction (rear to front direction) on the rear side of the fog lamp cover plate 3' for the sake of a secure installation. As illustrated in Fig.1, the space occupied by the installation between the fog lamp cover plate 3' and the fog lamp bracket 2' has a length l' of about 23mm on the rear side of the fog lamp cover plate 3'. Thus, when the fog lamp 4' is large, the X-direction gap between the fog lamp 4' and the fog lamp cover plate 3' should be relatively small, therefor it may lead to that there is no sufficient space in the X direction on the rear side of the fog lamp cover plate 3' for arranging a conventional connecting structure, thereby rendering it impossible to mount a fog lamp cover plate. To solve the above-mentioned technical problem, two technical solutions are adopted in the prior art: the first one is to replace a conventional connecting structure with a screw so as to fasten the fog lamp cover plate to the front bumper skin, which may, however, affect the vehicle appearance; and the second one is to integrally mould the fog lamp cover plate and the front bumper skin, which may, however, greatly limit the diversity of shape design. Moreover, under normal circumstances, the fog lamp cover plate and the skin are subject to different surface treatments, and usually need to undergo masking or special process treatments after integration thereof, which increases the cost.

Therefore, the present invention aims at providing a new technical solution to solve the above-mentioned technical problem.

The document JP2008247363A discloses a fog lamp mounting structure comprising a front bumper, a bezel and a cover, wherein the cover is attached to the bumper from its front side.

The document US2012113669A1 discloses a fog lamp cover mounting structure comprising a cover body and a cover ring. The cover body is assembled to a mounting portion at which a fog lamp is mounted on a front bumper.

### Summary

The object of the present invention is to provide a new-type fog lamp mounting structure, which achieves the mounting of the fog lamp cover plate when the X-direction gap between the fog lamp cover plate and the fog lamp is small, without affecting a vehicle appearance or increasing the cost. For this purpose, the present invention adopts the following technical features:
a fog lamp mounting structure comprising a front bumper skin, a fog lamp bracket mounted on the front bumper skin, and a fog lamp cover plate mounted on the fog lamp bracket, wherein
the fog lamp cover plate comprises a cover plate main body, a plurality of holding parts in a hook shape, for holding an edge of the fog lamp bracket, formed by flanging inwards from a top edge of the cover plate main body, and a plurality of cover plate buckles provided at a bottom edge of the cover plate main body; and wherein
the fog lamp bracket is provided with cover plate buckle mounting holes engaged with the cover plate buckles by means of a snap fit connexion, wherein the fog lamp cover plate is mounted from the top down along the Z direction which refers to the up-down direction of the vehicle.

Advantageously, the front bumper skin is provided with a welding rib for being welded to the fog lamp bracket.

Preferably, the welding rib extends into the fog lamp bracket and is welded with the fog lamp bracket.

Advantageously, the front bumper skin is provided with a skin buckle, and the fog lamp bracket is provided with a skin buckle mounting hole engaged with the skin buckle with a snap fit.

Preferably, the skin buckle is provided with a skin buckle guiding angle.

Preferably, the cover plate buckle is provided with a cover plate buckle guiding angle.

The advantageous effects of the present invention are the following: the holding part of the top edge of the fog lamp cover plate clamps the top edge of the fog lamp bracket so that the fog lamp cover plate cannot move in the X direction relative to the fog lamp bracket, thereby achieving the X-direction positioning and fastening effects. Meanwhile, the cover plate buckle of the bottom edge of the fog lamp cover plate is snapped into the corresponding cover plate buckle mounting hole of the fog lamp bracket, so that the fog lamp cover plate cannot move in the Y and Z directions relative to the fog lamp bracket, thereby achieving the Y-direction and Z-direction positioning and fastening effects. It can be seen that the above solution makes it easy and convenient to firmly mount the fog lamp cover plate to the front bumper skin. Since the holding parts and the cover plate buckles substantially do not occupy space in the X-direction between the fog lamp cover plate and the fog lamp, the mounting of the fog lamp cover plate can still be achieved even though the fog lamp is large and the gap in the X-direction between the fog lamp cover plate and the fog lamp is small. Furthermore, this solution will have no influence on the vehicle appearance and will not increase the cost.

### Brief description of the figures

Fig. 1 is a cross-sectional schematic view of a fog lamp mounting structure in the prior art;
Fig. 2 is a structural schematic view of a fog lamp cover plate of the present invention;
Fig. 3 illustrates a perspective view of a small assembly of the fog lamp bracket of the present invention;
Fig. 4 illustrates a cross-sectional schematic view taken along the line A-A of Fig. 3, showing the state of the fog lamp cover plate before being mounted to the fog lamp bracket;
Fig. 5 illustrates a cross-sectional schematic view taken along the line A-A of Fig. 3, showing the state of the fog lamp cover plate after being mounted to the fog lamp bracket;
Fig. 6 is a perspective view of the fog lamp mounting structure of the present invention;
Fig. 7 illustrates a cross-sectional schematic view taken along the line B-B of Fig. 6, showing the state of the small assembly of the fog lamp bracket before being mounted to a front bumper skin;
Fig. 8 illustrates a cross-sectional schematic view taken along the line B-B of Fig. 6, showing the state of the small assembly of the fog lamp bracket after being mounted to the front bumper skin; and
Fig. 9 illustrates a cross-sectional view of the mounted fog lamp.

### Description of embodiments

The preferred embodiment of the present invention will be described in detail with reference to the drawings.

The present invention is symmetrically disposed at both ends of a vehicle front bumper skin 1, the X direction in the present application refers to the front-rear direction of the vehicle, the Y direction refers to the left-right direction of the vehicle, and the Z direction refers to the up-down direction of the vehicle. For easy illustration, the direction of the parts refers to the direction of the parts after being installed on the vehicle.

As shown in Figs. 2 to 9, a fog lamp mounting structure of the present invention comprises the front bumper skin 1, a fog lamp bracket 2 mounted on the front bumper skin 1, and a fog lamp cover plate 3 mounted on the fog lamp bracket 2, wherein the fog lamp cover plate 3 comprises a cover plate main body 31, three holding parts 32, in a hook shape, formed by flanging inwards from a top edge of the cover plate main body 31 and three cover plate buckles 33 provided at a bottom edge of the cover plate main body 31; correspondingly, the fog lamp bracket 2 is provided with cover plate buckle mounting holes 21 engaged respectively with each cover plate buckles 33 with a snap fit. Preferably, in order to facilitate the insertion of the cover plate buckle 33 into the cover plate buckle mounting hole 21, the cover plate buckle 33 is provided at its distal end with an inclined cover plate buckle guiding angle (not shown).

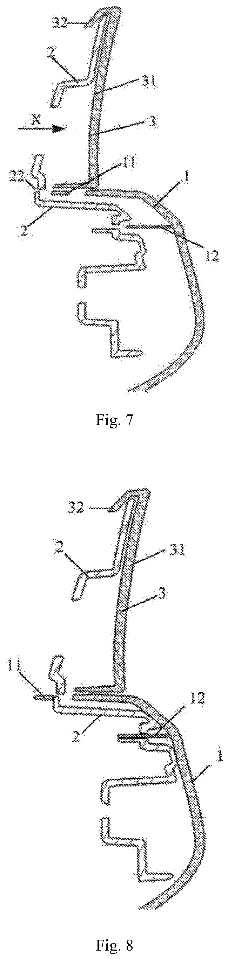

Moreover, as shown in Figs. 7 and 8, the front bumper skin 1 is provided with a skin buckle 11 and a welding rib 12, and the fog lamp bracket 2 is provided with a skin buckle mounting hole 22 engaged with the skin buckle 11 with a snap fit so as to firmly mount the fog lamp bracket 2 onto the front bumper skin 1 through the skin buckle 11 and the welding rib 12. Preferably, the welding rib 12 extends into the fog lamp bracket 2 and is welded to the fog lamp bracket 2, and the skin buckle 11 is provided at its distal end with an inclined skin buckle guiding angle (not shown).

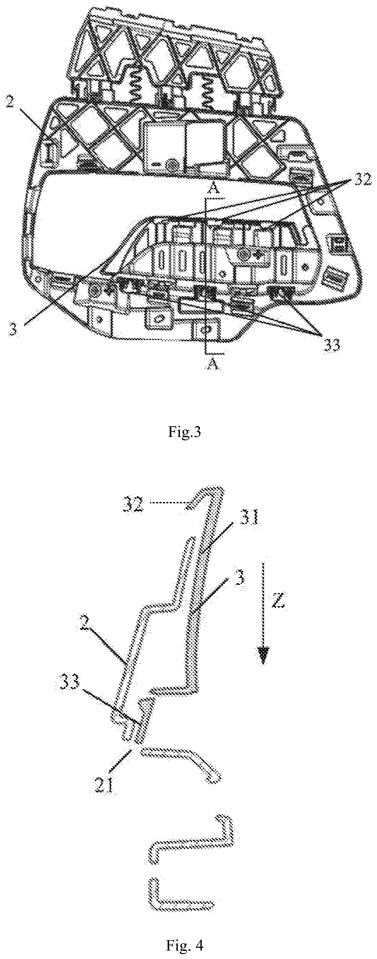

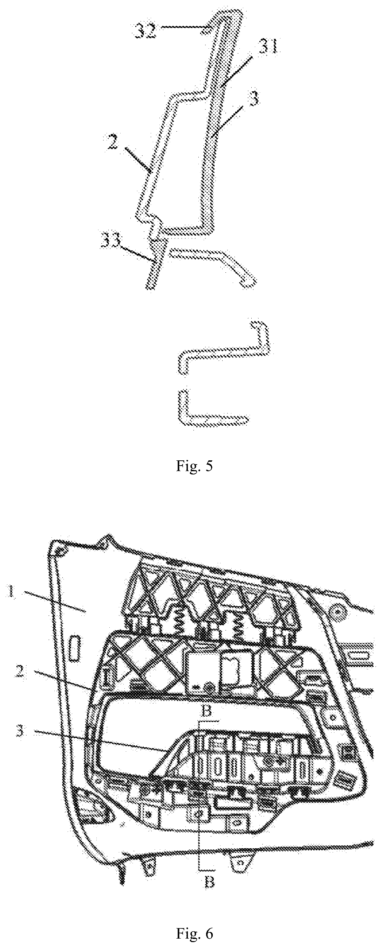

The mounting process of the present invention will be explained in detail:
Step 1: mounting the fog lamp cover plate 3 onto the fog lamp bracket 2 so as to form a small bracket assembly as shown in Fig. 3, to be specific,
as shown in Fig. 4, the fog lamp cover plate 3 is mounted from the top down along the Z direction, and the three cover plate buckles 33 on the bottom edge thereof are first in contact with the fog lamp bracket 2 and slide into the cover plate buckle mounting holes 21 under the guidance of the guiding angle; as the cover plate 3 continues to move downwards, the three holding parts 32 on the top thereof gradually hold the top edge of the fog lamp bracket 2, and when the holding parts 32 are mounted in position, the cover plate buckles 33 are synchronously clipped in position, as shown in Fig. 5; then, the circumferential gap of the cover plate is controlled by positioning ribs and positioning bosses on the fog lamp bracket 2, disposed at both sides of the holding parts 32 and the cover plate buckles 33. So far, the assembly of the fog lamp cover plate 3 and the fog lamp bracket 2 is completed to form the small bracket assembly as shown in Fig. 3.

After the assembly, the holding parts 32 of the fog lamp cover plate 3 hold the top edge of the fog lamp bracket 2, so that the fog lamp cover plate 3 cannot move in the X direction relative to the fog lamp bracket 2, thereby achieving the X-direction positioning and fastening effects. Meanwhile, the cover plate buckles 33 at the bottom edge of the fog lamp cover plate 3 are clipped into the corresponding cover plate buckle mounting holes 21 of the fog lamp bracket 2, so that the fog lamp cover plate 3 cannot move in the Y and Z directions relative to the fog lamp bracket 2, thereby achieving the Y- and Z-direction positioning and fastening effects.

Step 2: mounting the small bracket assembly onto the front bumper skin 1 to form the mounting structure as shown in Fig. 6, to be specific,
as shown in Fig. 7, the small bracket assembly consisting of the fog lamp cover plate 3 and the fog lamp bracket 2 is assembled onto the front bumper skin 1 along the Z direction. After the small bracket assembly is placed in position, as shown in Fig. 8, the skin buckle 11 on the skin 1 is first clipped into the skin buckle mounting hole 22 on the fog lamp bracket 2 so as to effectively achieve a pre-mounting function for the sake of preventing the small bracket assembly from moving or falling off before welding, and the skin buckle 11 is quite close to the cover plate, so that it can better control the gap between the cover plate and the front bumper skin 1. After the skin buckle 11 is clipped in position, the welding rib 12 on the skin 1 is welded to a corresponding position of the fog lamp bracket 2 so as to ensure a firm connection between the front bumper skin 1 and the fog lamp bracket 2.

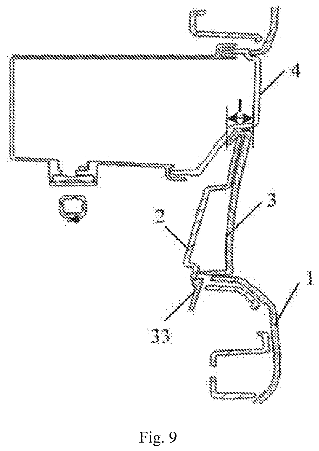

Step 3: as shown in Fig. 9, mounting a fog lamp 4 in a predetermined position of the fog lamp bracket 2 along the X direction, and the mounting process is completed.

It can thus be seen that the fog lamp cover plate 3 can be firmly mounted onto the front bumper skin 1 in a simple and convenient manner by means of the above solution. As shown in Fig. 9, the holding parts 32 and the cover plate buckles 33 occupy a rather smaller space in the X direction on the rear side of the fog lamp cover plate 3 (here the rear space taken having a length 1 of about 14mm, which is much smaller than that in the prior art), thus, the mounting can still be achieved even though the fog lamp 4 is large and the X-direction gap between the fog lamp cover plate 3 and the fog lamp 4 is small.

The above contents are merely preferred embodiments of the present invention and not intended to limit the scope of the present invention. Variations can be made to the above embodiments of the present invention, for instance the motor drive can be switched to handwheel drive.

## Claims

1. A fog lamp mounting structure comprising a front bumper skin (1), a fog lamp bracket (2) mounted on the front bumper skin (1), and a fog lamp cover plate (3) mounted on the fog lamp bracket (2), **characterized in that**
the fog lamp cover plate (3) comprises a cover plate main body (31), a plurality of holding parts (32), in a hook shape, formed by flanging inwards from a top edge of the cover plate main body (31) for holding an edge of the fog lamp bracket (2), and a plurality of cover plate buckles (33) provided at a bottom edge of the cover plate main body (31);
wherein the fog lamp bracket (2) is provided with cover plate buckle mounting holes (21) engaged with the cover plate buckles (33) by means of a snap fit connection, wherein the fog lamp cover plate (3) is mounted from the top down along the Z direction which refers to the up-down direction of the vehicle.

2. The fog lamp mounting structure according to claim 1, wherein the front bumper skin (1) is provided with a welding rib (12) for being welded to the fog lamp bracket (2).

3. The fog lamp mounting structure according to claim 2, wherein the welding rib (12) extends into the fog lamp bracket (2) and is welded with the fog lamp bracket (2).

4. The fog lamp mounting structure according to any one of claims 1 to 3, wherein the front bumper skin (1) is provided with a skin buckle (11), and the fog lamp bracket (2) is provided with a skin buckle mounting hole (22) engaged with the skin buckle (11) with a snap fit.

5. The fog lamp mounting structure according to claim 4, wherein the skin buckle (11) is provided with a skin buckle guiding angle.

6. The fog lamp mounting structure according to any one of claims 1 to 3, wherein the cover plate buckle (33) is provided with a cover plate buckle guiding angle.

## Patentansprüche

1. Nebelscheinwerfer-Befestigungsstruktur umfassend eine vordere Stoßfängerschale (1), einen Nebelscheinwerfer-Halter (2), der an der vorderen Stoßfängerschale (1) angeordnet ist, und eine Nebelscheinwerfer-Abdeckplatte (3), die an dem Nebelscheinwerfer-Halter (2) angeordnet ist, **dadurch gekennzeichnet, dass** die Nebelscheinwerfer-Abdeckplatte (3) einen Abdeckplatten-Hauptkörper (31) umfasst, mehrere hakenförmige Halteteile (32), die durch Anflanschen nach innen von einer Oberkante des Abdeckplatten-Hauptkörpers (31) gebildet sind, um eine Kante des Nebelscheinwerfer-Halters (2) zu halten, und mehrere Abdeckplatten-Schnallen (33), die an einer Unterkante des Abdeckplatten-Hauptkörpers (31) vorgesehen sind; wobei der Nebelscheinwerfer-Halter (2) mit Befestigungslöchern (21) versehen ist, die mit den Abdeckplatten-Schnallen (33) mittels einer Schnappverbindung in Eingriff stehen, wobei die Nebelscheinwerfer-Abdeckscheibe (3) von oben nach unten entlang der Z-Richtung befestigt ist, welche sich auf die Aufwärts-AbwärtsRichtung des Fahrzeugs bezieht.

2. Nebelscheinwerfer-Befestigungsstruktur nach Anspruch 1, wobei die vordere Stoßfängerschale (1) mit einer Schweißrippe (12) zum Anschweißen an den Nebelscheinwerfer-Halter (2) versehen ist.

3. Nebelscheinwerfer-Befestigungsstruktur nach Anspruch 2, wobei sich die Schweißrippe (12) in den Nebelscheinwerfer-Halter (2) erstreckt und mit dem Nebelscheinwerfer-Halter (2) verschweißt ist.

4. Nebelscheinwerfer-Befestigungsstruktur nach einem der Ansprüche 1 bis 3, wobei die vordere Stoßfängerschale (1) mit einer Klemmschnalle (11) versehen ist und der Nebelscheinwerfer-Halter (2) mit einem Klemmschnallen-Befestigungsloch (22) versehen ist, das mit der Klemmschnalle (11) mit einem Schnappsitz in Eingriff steht.

5. Nebelscheinwerfer-Befestigungsstruktur nach Anspruch 4, wobei der Klemmschnalle (11) mit einem Klemmschnallen-Führungswinkel versehen ist.

6. Nebelscheinwerfer-Befestigungsstruktur nach einem der Ansprüche 1 bis 3, wobei die Deckplattenschnalle (33) mit einem Führungswinkel der Deckplattenschnalle versehen ist.

## Revendications

1. Une structure de montage de phare antibrouillard comprenant une peau (1) de pare-chocs avant, un support (2) de phare antibrouillard monté sur la peau (1) de pare-chocs avant et une plaque (3) de recouvrement de phare antibrouillard montée sur le support (2) de phare antibrouillard, **caractérisé en ce que**
la plaque (3) de recouvrement de phare antibrouillard comprend un corps principal (31) de plaque de recouvrement, une pluralité de parties de maintien (32), en forme de crochet, formées par un rebord dirigé vers l'intérieur s'étendant à partir d'un bord supérieur du corps principal (31) de plaque de recouvrement pour maintenir un bord du support (2) de phare antibrouillard, et une pluralité de boucles (33) de plaque de recouvrement prévues sur un bord inférieur du corps principal (31) de plaque de recouvrement;
le support (2) de phare antibrouillard étant pourvu de trous (21) de montage de boucles de plaque de recouvrement en engagement avec les boucles (33) de plaque de recouvrement au moyen d'une connexion à encliquetage, la plaque (3) de recouvrement de phare antibrouillard étant montée de haut en bas le long de la direction Z qui se réfère à la direction haut-bas du véhicule.

2. La structure de montage de phare antibrouillard selon la revendication 1, dans laquelle la peau (1) de pare-chocs avant est pourvue d'une nervure de soudage (12) pour être soudée au support (2) de phare antibrouillard.

3. La structure de montage de phare antibrouillard selon la revendication 2, dans laquelle la nervure de soudage (12) s'étend dans le support (2) de phare antibrouillard et est soudée avec le support (2) de phare antibrouillard.

4. La structure de montage de phare antibrouillard selon l'une quelconque des revendications 1 à 3, dans laquelle la peau (1) de pare-chocs avant est pourvue d'une boucle (11) de peau, et le support (2) de phare antibrouillard est pourvu d'un trou (22) de montage de boucle de peau en engagement avec la boucle (11) de peau avec un engagement ajusté par encliquetage.

5. La structure de montage de phare antibrouillard selon la revendication 4, dans laquelle la boucle de peau (11) est pourvue d'un angle de guidage de boucle de peau.

6. La structure de montage de phare antibrouillard selon l'une quelconque des revendications 1 à 3, dans laquelle la boucle (33) de plaque de recouvrement est pourvue d'un angle de guidage de boucle de plaque de recouvrement.
